# FASCICULE DE BREVET EUROPEEN

(11) **EP 1 284 224 B1**
(45) Date de publication et mention de la délivrance du brevet: **27.10.2004**
(21) Numéro de dépôt: 02292016.9
(22) Date de dépôt: 09.08.2002
(51) Int. Cl.: B65D 81/127, B32B 27/28

(54) **Cale pelable comportant des feuilles d'épaisseur identifiable**
Zwischenstück mit abziehbaren Folien von identifizierbarer Dicke
Peelable shim having foils of identifiable thickness

(30) Priorité: 14.08.2001 FR 0110828
(43) Date de publication de la demande: 19.02.2003
(73) Titulaire: Caillas, Jean-Jacques, 78000 Versailles (FR)
(72) Inventeur: Caillas, Jean-Jacques, 78000 Versailles (FR)
(74) Mandataire: Blot, Philippe Robert Emile

(56) Documents cités:
- GB-A- 577 354
- US-A- 4 526 641

## Description

La présente invention concerne une cale pelable comportant un empilement de feuilles, chacune d'une épaisseur prédéterminée.

Dans de nombreux mécanismes nécessitant des ajustements précis, il est connu d'utiliser des cales pelables, afin de compenser les tolérances de fabrication. Ces cales assurent un positionnement correct des éléments du mécanisme les uns par rapport aux autres.

De telles cales pelables comportent un empilement de feuilles d'épaisseur prédéterminée liées les unes aux autres. Afin que la cale s'ajuste exactement dans l'intervalle devant être comblé, les feuilles élémentaires constituant la cale sont enlevées une à une jusqu'à obtention de l'épaisseur totale désirée pour la cale.

L'usage de telles cales évite l'usinage et la rectification de cales d'épaisseur en métal plein.

Ces cales sont utilisées notamment dans des organes de transmission, des boîtes de vitesses, des roulements, et des réducteurs à engrenage.

Il est connu, afin de réduire le coût des cales pelables, de prévoir suivant l'épaisseur de la cale un premier groupe de feuilles ayant une première épaisseur puis un second groupe de feuilles ayant une seconde épaisseur. Ces épaisseurs sont par exemple égales à 0,1 mm et 0,05 mm.

Lorsque les cales sont constituées de feuilles métalliques, les feuilles d'épaisseurs différentes sont généralement réalisées dans des matériaux distincts. Ainsi, les couleurs des feuilles sont différentes.

L'opérateur en charge de l'ajustement de l'épaisseur de la cale peut déterminer facilement, à partir de la couleur des feuilles ou de leur état de surface, le nombre et la nature des feuilles devant être retirées afin d'obtenir l'épaisseur désirée.

En revanche, lorsque la cale est constituée de feuilles formées en polymère, les feuilles d'épaisseurs différentes sont généralement réalisées dans le même matériau, de sorte que celles-ci ont la même couleur.

Il est alors extrêmement malaisé, pour l'opérateur, de distinguer les feuilles en fonction de leur épaisseur lors du réglage de la cale.

Les feuilles de polymère peuvent être teintées en fonction de leur épaisseur. Toutefois, la teinture des feuilles est à l'origine d'un surcoût, lors de la fabrication de la cale.

L'invention a pour but de proposer une cale pelable d'un coût réduit, permettant l'identification des feuilles pouvant être enlevées.

A cet effet, l'invention a pour objet une cale pelable du type précité, caractérisée en ce que ledit empilement de feuilles comporte au moins un groupe de feuilles successives transparentes, et en ce que ledit empilement de feuilles comporte une feuille d'identification sur laquelle est ménagé au moins un signe distinctif agencé pour être visible au travers d'un groupe de feuilles transparentes successives.

Suivant des modes particuliers de réalisation, la cale comporte l'une ou plusieurs des caractéristiques suivantes :
- elle comporte une unique feuille d'identification ;
- la feuille d'identification est opaque ;
- les feuilles d'un même groupe ont toutes la même épaisseur ;
- la feuille d'identification a la même épaisseur que les feuilles d'un groupe de feuilles ;
- elle comporte un premier et un second groupes de feuilles dont les feuilles ont, respectivement, une première et une seconde épaisseur, les premier et second groupes de feuilles étant disposés de part et d'autre de la feuille d'identification, laquelle feuille d'identification comporte au moins un signe distinctif agencé pour être visible au travers de seulement un groupe de feuilles ;
- la feuille d'identification comporte deux signes distinctifs différents visibles, pour l'un, au travers de seulement le premier groupe de feuilles et, pour l'autre, seulement au travers du second groupe de feuilles ;
- elle comporte deux feuilles d'identification interposées entre les deux groupes de feuilles, chaque feuille d'identification comportant au moins un signe distinctif agencé pour être visible au travers de seulement un groupe de feuilles associé ;
- lesdites feuilles sont formées de polymère ;
- la feuille d'identification comporte des marques complémentaires visibles au travers d'au moins un groupe de feuilles ;
- elle comporte un flan rigide ayant une épaisseur supérieure à l'épaisseur des feuilles du ou de chaque groupe de feuilles, lequel flan est intégré dans l'empilement de feuilles ; et
- ledit flan constitue ladite feuille d'identification.

L'invention sera mieux comprise à la lecture de la description qui va suivre, donnée uniquement à titre d'exemple et faite en se référant aux dessins, sur lesquels :

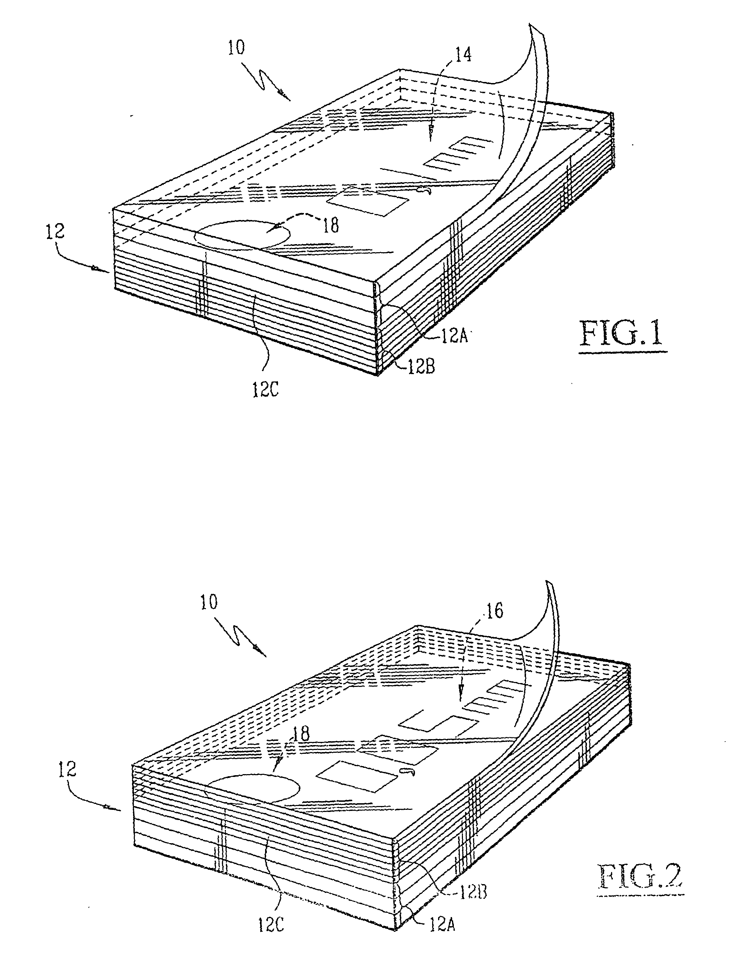

- la figure 1 est une vue en perspective d'une cale pelable selon l'invention vue depuis un premier côté ;
- la figure 2 est une vue en perspective de la cale pelable de la figure 1, celle-ci ayant été retournée ; et

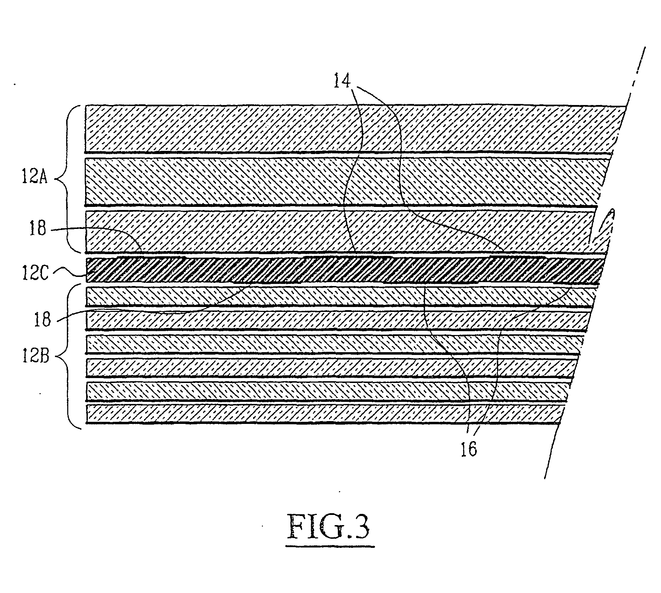

- la figure 3 est une vue en coupe transversale de la cale des figures 1 et 2.

Sur les figures est représentée une cale pelabie 10 destinée à être interposée entre deux éléments mécaniques d'un mécanisme.

Cette cale comporte un empilement de feuilles 12. Toutes ces feuilles ont la même surface et le même contour.

Les feuilles 12 sont maintenues empilées, par exemple par un film de colle interposé entre chacune des feuilles sur tout la surface de leurs faces en regard.

Les feuilles sont formées de polymère tel que du KAPTON ou du MY-LAR (Marques de la société Du Pont de Nemours). Sur les figures, les épaisseurs des feuilles sont exagérées et leur nombre est réduit pour des raisons de clarté.

L'empilement de feuilles 12 comporte un premier groupe de feuilles transparentes 12A ayant une première épaisseur déterminée. Toutes les feuilles 12A de ce premier groupe ont la même épaisseur. Cette épaisseur est par exemple égale à 0,1 mm. Initialement, les feuilles 12A sont au nombre de 20.

Par ailleurs, l'empilement 12 comporte un second groupe de feuilles transparentes 12B ayant toutes une même seconde épaisseur, cette seconde épaisseur étant différente de la première épaisseur. Cette seconde épaisseur est par exemple égale à 0,05 mm. Le nombre des feuilles 12B est par exemple égal à 10. Ce nombre est choisi suffisamment grand pour qu'après réglage de la cale, au moins quatre feuilles subsistent dans la cale.

Avantageusement, le nombre de feuilles 12A de plus grande épaisseur est supérieur au nombre de feuilles 12B de plus petite épaisseur.

Le premier groupe de feuilles 12A s'étend d'un côté de la cale alors que le second groupe 12B de feuilles s'étend de l'autre côté de la cale.

Entre les premier et second groupes de feuilles est disposée une feuille d'identification 12C.

Selon l'invention, la feuille d'identification 12C présente au moins un signe 14 distinctif du côté de la feuille d'identification agencé pour être visible au travers de l'un au moins des groupes de feuilles transparentes successives.

Dans le mode de réalisation envisagé, la feuille d'identification 12C présente, sur l'une de ses faces, une inscription 14 indiquant l'épaisseur des feuilles 12A. Cette inscription est par exemple "0,1 mm".

Cette inscription est imprimée sur la surface de la feuille d'identification 12C sur laquelle est collé le premier groupe de feuilles 12A dont l'épaisseur est égale à 0,1 mm.

Sur sa face opposée, la feuille d'identification 12C comporte une autre inscription 16 indiquant l'épaisseur des feuilles du second groupe de feuilles 12B. Cette inscription est par exemple "0,05 mm".

Avantageusement, la feuille d'identification 12C est opaque, de sorte que seule l'une des deux inscriptions 14 ou 16 est visible au travers d'un groupe de feuilles 12A ou 12B. L'épaisseur de la feuille intermédiaire est de préférence égale à l'épaisseur des cales de l'un ou l'autre des groupes de feuilles 12A et 12B.

En outre, et avantageusement, la feuille d'identification comporte sur l'une et/ou l'autre de ses faces des inscriptions complémentaires 18, constituées par exemple par le nom de la société fabriquant la cale, ou encore des explications concernant son utilisation.

Lors de la mise en place d'une telle cale, l'utilisateur peut déterminer facilement le côté où se trouvent les feuilles d'une épaisseur donnée. En effet, quel que soit le nombre de feuilles d'une épaisseur donnée qui ont déjà été retirées, il apparaît au travers de chacune des faces de la cale l'une ou l'autre des inscriptions 14 et 16. En fonction de la marque visible, l'utilisateur comprend que les feuilles tournées vers lui ont l'épaisseur indiquée sur la face visible de la cale.

Dans la mesure où seule l'une des feuilles doit être imprimée, le coût de fabrication d'une telle cale est réduit, les autres feuilles de la cale pouvant être formées dans un film transparent quelconque et sans que celui-ci n'ait à être coloré pour permettre de distinguer les feuilles d'épaisseur différente.

Par ailleurs, dans la mesure où seule l'une des feuilles est imprimée, la surépaisseur produite par les encres utilisées pour l'impression est négligeable vis-à-vis de l'épaisseur totale de la cale. Tel ne serait pas le cas si l'ensemble des feuilles était pourvu d'un signe distinctif imprimé.

En variante, la cale comporte une feuille très épaisse vis-à-vis des groupes de feuilles transparentes, Cette feuille très épaisse constitue un flan rigide dont l'épaisseur est comprise par exemple entre 0,5 mm et 30 mm. Le flan est disposé dans la partie médiane de la cale. Le coût de la cale intégrant un tel flan est réduit puisque le flan a un coût inférieur à un empilage de même épaisseur formé de feuilles d'épaisseurs réduites. Le flan constitue par exemple la feuille d'identification 12C portant les inscriptions. En variante, le flan est distinct de la feuille d'identification 12C. Dans ce dernier cas, il est alors avantageusement transparent.

Suivant encore une autre variante, la cale comporte deux feuilles d'identification successives. Chaque feuille d'identification porte une inscription représentative de l'épaisseur de l'empilage de feuilles immédiatement adjacent.

De plus, avantageusement, chaque feuille d'identification a une épaisseur égale aux feuilles de l'empilage adjacentes et dont l'épaisseur est inscrite sur la feuille d'identification en cause.

La cale peut ainsi être formée facilement par assemblage de deux demi-cales constituées de feuilles empilées de même épaisseur, chaque demi-cale comportant une feuille d'identification portant des inscriptions seulement représentatives de l'épaisseur des feuilles contenues dans la demi-cale.

## Revendications

1. Cale pelable (10) comportant un empilement de feuilles (12A, 12B) chacune d'une épaisseur prédéterminée, **caractérisée en ce que** ledit empilement de feuilles comporte au moins un groupe de feuilles successives transparentes (12A, 12B), et **en ce que** ledit empilement de feuilles comporte une feuille d'identification (12C) sur laquelle est ménagé au moins un signe distinctif (14, 16) agencé pour être visible au travers d'un groupe de feuilles transparentes successives (12A, 12B).

2. Cale selon la revendication 1, **caractérisée en ce qu'**elle comporte une unique feuille d'identification (12C).

3. Cale selon la revendication 1 ou 2, **caractérisée en ce que** la feuille d'identification (12C) est opaque.

4. Cale selon l'une quelconque des revendications précédentes, **caractérisée en ce que** les feuilles (12A, 12B) d'un même groupe ont toutes la même épaisseur.

5. Cale selon la revendication 4, **caractérisée en ce que** la feuille d'identification (12C) a la même épaisseur que les feuilles d'un groupe de feuilles (12A, 12B).

6. Cale selon l'une quelconque des revendications précédentes, **caractérisée en ce qu'**elle comporte un premier et un second groupes de feuilles (12A, 12B) dont les feuilles ont, respectivement, une première et une seconde épaisseur, les premier et second groupes de feuilles (12A, 12B) étant disposés de part et d'autre de la feuille d'identification (12C), laquelle feuille d'identification (12C) comporte au moins un signe distinctif (14, 16) agencé pour être visible au travers de seulement un groupe de feuilles.

7. Cale pelable selon la revendication 6, **caractérisée en ce que** la feuille d'identification (12C) comporte deux signes distinctifs différents (14, 16) visibles, pour l'un, au travers de seulement le premier groupe de feuilles (12A) et, pour l'autre, seulement au travers du second groupe de feuilles (12B).

8. Cale selon la revendication 6, **caractérisée en ce qu'**elle comporte deux feuilles d'identification interposées entre les deux groupes de feuilles, chaque feuille d'identification comportant au moins un signe distinctif agencé pour être visible au travers de seulement un groupe de feuilles associé.

9. Cale selon l'une quelconque des revendications précédentes, **caractérisée en ce que** lesdites feuilles (12A, 12B, 12C) sont formées de polymère.

10. Cale selon l'une quelconque des revendications précédentes, **caractérisée en ce que** la feuille d'identification (12C) comporte des marques complémentaires (16, 18) visibles au travers d'au moins un groupe de feuilles (12A, 12B).

11. Cale selon l'une quelconque des revendications précédentes, **caractérisée en ce qu'**elle comporte un flan rigide ayant une épaisseur supérieure à l'épaisseur des feuilles du ou de chaque groupe de feuilles, lequel flan est intégré dans l'empilement de feuilles.

12. Cale selon la revendication 11, **caractérisée en ce que** ledit flan constitue ladite feuille d'identification.

## Patentansprüche

1. Abziehbares Zwischenstück (10), welches einen Stapel von Folien (12A, 12B) von jeweils vorbestimmter Dicke umfasst, **dadurch gekennzeichnet, dass** der Folienstapel zumindest eine Gruppe von aufeinander folgenden transparenten Folien (12A, 12B) aufweist, und dass der Folienstapel eine Identifikationsfolie (12C) aufweist, auf der zumindest ein Unterscheidungszeichen (14, 16) vorgesehen ist, welches dafür ausgelegt ist, durch eine Gruppe von aufeinander folgenden durchsichtigen Folien (12A, 12B) sichtbar zu sein.

2. Zwischenstück nach Anspruch 1, **dadurch gekennzeichnet, dass** es eine einzige Identifikationsfolie (12C) aufweist.

3. Zwischenstück nach Anspruch 1 oder 2, **dadurch gekennzeichnet, dass** die Identifikationsfolie (12C) undurchsichtig ist.

4. Zwischenstück nach einem der vorstehenden Ansprüche, **dadurch gekennzeichnet, dass** die Folien (12A, 12B) einer selben Gruppe alle die gleiche Dicke besitzen.

5. Zwischenstück nach Anspruch 4, **dadurch gekennzeichnet, dass** die Identifikationsfolie (12C) die gleiche Dicke besitzt wie die Folien einer Gruppe von Folien (12A, 12B).

6. Zwischenstück nach einem der vorstehenden Ansprüche, **dadurch gekennzeichnet, dass** es eine erste und eine zweite Gruppe von Folien (12A, 12B) aufweist, deren Folien jeweils eine erste bzw. eine zweite Dicke haben, wobei die erste und die zweite Gruppe von Folien (12A, 12B) auf der einen und der anderen Seite der Identifikationsfolie (12C) liegen und wobei die Identifikationsfolie (12C) zumindest ein Unterscheidungszeichen (14, 16) aufweist, welches dafür ausgelegt ist, durch nur eine der Gruppe von Folien hindurch sichtbar zu sein.

7. Abziehbares Zwischenstück nach Anspruch 6, **dadurch gekennzeichnet, dass** die Identifikationsfolie (12C) zwei verschiedene Unterscheidungszeichen (14, 16) aufweist, wobei das eine nur durch die erste Gruppe von Folien (12A) hindurch und das andere nur durch die zweite Gruppe von Folien (12B) hindurch sichtbar ist.

8. Zwischenstück nach Anspruch 6, **dadurch gekennzeichnet, dass** es zwei zwischen den zwei Gruppen von Folien eingesetzte Identifikationsfolien aufweist, wobei jede Identifikationsfolie mindestens ein Unterscheidungszeichen aufweist, welches dafür ausgelegt ist, nur durch eine dazugehörige Gruppe von Folien sichtbar zu sein.

9. Zwischenstück nach einem der vorstehenden Ansprüche, **dadurch gekennzeichnet, dass** die Folien (12A, 12B, 12C) aus einem Polymer gebildet sind.

10. Zwischenstück nach einem der vorstehenden Ansprüche, **dadurch gekennzeichnet, dass** die Identifikationsfolie (12C) zusätzliche Markierungen (16, 18) aufweist, welche durch zumindest eine Gruppe von Folien (12A, 12B) hindurch sichtbar sind.

11. Zwischenstück nach einem der vorstehenden Ansprüche, **dadurch gekennzeichnet, dass** es eine starre Platte aufweist, die in den Folienstapel integriert ist und eine Dicke besitzt, die größer ist als die Dicke der Folien der Gruppe oder jeder Gruppe von Folien.

12. Zwischenstück nach Anspruch 11, **dadurch gekennzeichnet, dass** die Platte die Identifikationsfolie darstellt.

## Claims

1. A peelable pad (10) composed of a stack of sheets (12A, 12B) each of a predetermined thickness and **characterised by** the fact that the aforementioned stack of sheets includes at least one group of successive transparent sheets (12A, 12B) and that the aforementioned stack of sheets includes an identification sheet (12C) on which is arranged at least one distinctive sign (14, 16) arranged so that it is visible through a group of successive transparent sheets (12A, 12B).

2. Pad as described in claim 1, **characterised by** the fact that it includes a single identification sheet (12C)

3. Pad as described claim 1 or 2, **characterised by** the fact that the identification sheet (12C) is opaque.

4. Pad as described in any of the preceding claims whatsoever, **characterised by** the fact that the sheets (12A, 12B) in a given group have the same thickness.

5. Pad as described in claim 4, **characterised by** the fact that the identification sheet (12C) has the same thickness as the sheets in a groups of sheets (12A, 12B)

6. Pad as described in any of the preceding claims, **characterised by** the fact that it contains a first and second group of sheets (12A, 12B) the sheets of which are respectively of a first and second thickness, with the first and second groups of sheets (12A, 12B) being placed on either side of the identification sheet (12C) and with the identification sheet (12C) bearing at least one distinctive sign (14,16) arranged so that it is visible though only one group of sheets

7. Peelable pad as described in claim 6, **characterised by** the fact that the identification sheet (12C) bears two distinctive signs (14, 16) one of which is visible only through the first group of sheets (12A) and the other only through the second group of sheets (12B).

8. Pad as described in claim 6, **characterised by** the fact that it includes two identification sheets inserted between the two groups of sheets each identification sheet bearing at least one distinctive sign arranged so that it is visible through only one group of associated sheets.

9. Pad as described in any of the preceding claims whatsoever, **characterised by** the fact that the aforementioned sheets (12A, 12B, 12C) are made of polymer

10. Pad as described in any of the preceding claims whatsoever **characterised by** the fact that the identification sheet (12C) bears supplementary marks (16, 18) which are visible through at least one group of sheets (12A, 12B).

11. Pad as described in any of the preceding claims whatsoever, **characterised by** the fact that it includes a rigid panel which has a thickness that is greater than the thickness of the (or each) group of sheets, with this panel being integral with the stack of sheets.

12. Pad as described in claim 11, **characterised by** the fact that the aforementioned panel makes up the aforementioned identification sheet.
